# EUROPEAN PATENT APPLICATION

(11) **EP 4 628 193 A1**
(43) Date of publication of application: **08.10.2025**
(21) Application number: 23897737.5
(22) Date of filing: 27.11.2023
(51) Int. Cl.: B01D 53/14, B01J 20/02, B01J 20/04, B01J 20/06, C01B 32/50, C01B 32/60

(54) **METHOD FOR REUSING CARBON DIOXIDE ABSORBENT MATERIAL, METHOD FOR PRODUCING STRUCTURE, STRUCTURE, MIXTURE AND SECONDARY PROCESSED PRODUCT**

(30) Priority: 29.11.2022 JP 2022190371
(71) Applicant: SUMITOMO ELECTRIC INDUSTRIES, LTD., Osaka-shi, Osaka 541-0041 (JP)
(72) Inventor: BABA, Masato, Osaka-shi, Osaka 541-0041 (JP); MAEDA, Toru, Osaka-shi, Osaka 541-0041 (JP); HIRAI, Kei, Osaka-shi, Osaka 541-0041 (JP); NAKAJIMA, Tetsuya, Osaka-shi, Osaka 541-0041 (JP); AMANO, Nobuya, Osaka-shi, Osaka 541-0041 (JP)
(74) Representative: Boult Wade Tennant LLP
(86) International application number: PCT/JP2023/042407
(87) International publication number: WO 2024/117089

(57) **Abstract**

A method for reusing a carbon dioxide absorbent material according to one embodiment of the present disclosure comprises supplying a structure that contains one or more carbon dioxide absorbent materials, which have absorbed carbon dioxide, to a supply-receiving object, and the carbon dioxide absorbent material is a metal or a metal compound.

## Description

### TECHNICAL FIELD

The present disclosure relates to a method for reusing a carbon dioxide absorbent material, a method for manufacturing a structure, a structure, a mixture, and a secondary processed product. The present application claims a priority to Japanese Patent Application No. 2022-190371, which is a Japanese application dated November 29, 2022, the entire contents of which being herein quoted.

### BACKGROUND ART

From the viewpoint of reducing a load on the natural environment caused by human activities, utilizing a material that may absorb carbon dioxide (hereinafter also referred to as "carbon dioxide absorbent material") has been considered (see PTL 1 and the like).

### CITATION LIST

### PATENT LITERATURE

PTL 1: Japanese Patent Laying-Open No. 2007-031169
PTL 2: Japanese Patent Laying-Open No. 2007-075773

### SUMMARY OF INVENTION

A method for reusing a carbon dioxide absorbent material according to one embodiment of the present disclosure comprises supplying a structure that contains one or more carbon dioxide absorbent materials, which have absorbed carbon dioxide, to a supply-receiving object; and the carbon dioxide absorbent material is a metal or a metal compound.

### BRIEF DESCRIPTION OF DRAWINGS

Fig. 1 is a flow diagram that illustrates a method for reusing a carbon dioxide absorbent material according to one embodiment of the present disclosure.
Fig. 2 is a flow diagram that illustrates a method for reusing a carbon dioxide absorbent material according to an embodiment of the present disclosure different from the embodiment illustrated in Fig. 1.
Fig. 3 is a flow diagram that illustrates a method for reusing a carbon dioxide absorbent material according to an embodiment of the present disclosure different from the embodiments illustrated in Figs. 1 and 2.
Fig. 4 is a flow diagram that illustrates a method for manufacturing a structure according to one embodiment of the present disclosure.
Fig. 5 is a schematic perspective view that illustrates a structure according to one embodiment of the present disclosure.
Fig. 6 is a schematic sectional view that illustrates a mixture according to one embodiment of the present disclosure.
Fig. 7 is a schematic sectional view that illustrates a secondary processed product according to one embodiment of the present disclosure.

### DETAILED DESCRIPTION

### [Problem to be Solved by the Present Disclosure]

A carbon dioxide absorbent material that has absorbed carbon dioxide needs to be appropriately processed. As methods for processing the material, transporting the material and disposing of the material, separating carbon dioxide from the material for reusing, and the like are considered. However, transportation of the carbon dioxide absorbent material and separation of the carbon dioxide require energy and, therefore, there is a risk that carbon dioxide is additionally emitted when the energy is supplied. In addition, the carbon dioxide absorbent material absorbs carbon dioxide to increase in mass and volume and, therefore, the energy required for the processing is likely to increase. Therefore, from the viewpoint of LCA (Life Cycle Assessment) of carbon dioxide, it may be difficult to achieve a sufficient reduction in carbon dioxide emission.

On the other hand, if the method for processing the carbon dioxide absorbent material is an easier method that does not require consumption of energy by the above-described transportation and the like, the method may lead to effective reduction in carbon dioxide emission from the viewpoint of LCA. In addition, such a method for processing the carbon dioxide absorbent material does not necessarily require management by a business operator or a large-scale investment in facilities, and may be easily incorporated in activities in households and communities as well. That is, such a method may lead to cooperation between unspecified large number of activities and utilization of the carbon dioxide absorbent material, thereby achieving a larger-scale reduction in carbon dioxide emission than before.

The present disclosure has been made in view of the above situation, and the object of the present disclosure is to provide a method for reusing a carbon dioxide absorbent material that may be easily performed and causes a small environmental load.

### [Advantageous Effect of the Present Disclosure]

A method for reusing a carbon dioxide absorbent material according to one embodiment of the present disclosure may be easily performed and causes a small environmental load.

### [Description of Embodiments]

First, the embodiments of the present disclosure will be enumerated for description.
(1) A method for reusing a carbon dioxide absorbent material according to one embodiment of the present disclosure comprises supplying a structure that contains one or more carbon dioxide absorbent materials, which have absorbed carbon dioxide, to a supply-receiving object; and the carbon dioxide absorbent material is a metal or a metal compound.
   In the method for reusing the carbon dioxide absorbent material, as the carbon dioxide absorbent material is a metal or a metal compound, the material absorbs carbon dioxide to change into a metal carbonate. The structure that contains a metal carbonate may be easily supplied to the various supply-receiving objects, including a living body and the natural environment. Here, in addition, a supplying means that does not require energy may be easily adopted. Therefore, the method for reusing the carbon dioxide absorbent material may be easily performed and causes a small environmental load.
(2) In the above (1), the method may further comprise causing absorption of carbon dioxide by the carbon dioxide absorbent material before the supplying, and contact between a carbonate ion and the carbon dioxide absorbent material covered with a solution may be caused in the causing absorption. If contact between the carbonate ion and the carbon dioxide absorbent material covered with a solution is caused in this manner, absorption of the carbonate ion may be promoted, whereby the metal carbonate may be easily manufactured. On the other hand, the carbon dioxide absorbent material covered with a solution is likely to contain moisture, resulting in increase in mass and volume. Processing the carbon dioxide absorbent material that has increased in mass and volume requires a large amount of energy and, therefore, the above-described effect of the method for reusing the carbon dioxide absorbent material significantly exhibits.
(3) In the above (1) or (2), the carbon dioxide absorbent material may be diluted in the supplying. If the carbon dioxide absorbent material is diluted in this manner, the environmental load may be smaller. Here, "diluting" refers to mixing the structure with a solvent such as water to allow the structure to disperse in the solvent.
(4) In any one of the above (1) to (3), the supply-receiving object may be a living thing, and the method may further comprise metabolizing of the supplied carbon dioxide absorbent material by the living thing in the supplying. If the supply-receiving object is a living thing, a supplying means that does not require energy may be adopted more easily. In addition, carbon dioxide is retained in the body of the living thing through the metabolizing, whereby the environmental load may be smaller.
(5) In any one of the above (1) to (4), the method may further comprise volume-reducing the structure. If the method further comprises the volume-reducing in this manner, the supplying may be performed more easily. Here, "volume reduction" refers to removing or reducing components such as moisture from the structure, other than the carbon dioxide absorbent material and the support member; reducing the unit to be supplied to the supply-receiving object by physical compressing, cutting, or the like of the structure; biologically decomposing the structure; and the like.
(6) In any one of the above (1) to (5), the carbon dioxide absorbent material may be an alkali metal, an alkali earth metal, a transition metal, or a compound of these metals. If the carbon dioxide absorbent material is an alkali metal, an alkali earth metal, a transition metal, or a compound of these metals in this manner, the carbon dioxide absorbent material is likely to be a metal carbonate that causes a smaller environmental load after absorbing carbon dioxide. In addition, the structure that contains the metal carbonate may be supplied to the various supply-receiving objects more easily.
(7) In the above (6), the carbon dioxide absorbent material may be at least one selected from the group consisting of iron, an iron compound, magnesium, a magnesium compound, calcium, and a calcium compound. If the carbon dioxide absorbent material is at least one selected from the above group, the carbon dioxide absorbent material is likely to be a metal carbonate that causes a smaller environmental load after absorbing carbon dioxide. In addition, the structure that contains the metal carbonate may be supplied to the various supply-receiving objects more easily.
(8) In any one of the above (1) to (7), the structure may have a support member that supports the one or more carbon dioxide absorbent materials. If the structure has a support member in this manner, the carbon dioxide absorbent material may absorb carbon dioxide more easily.
(9) In the above (8), the support member may be a biodegradable material or a non-artificial material. If the support member is a biodegradable material or a non-artificial material in this manner, the environmental load may be smaller.
(10) In any one of the above (1) to (9), the structure may have a determining mechanism that allows for determination of decrease in activity of the carbon dioxide absorbent material. If the structure has a determining mechanism that allows for determination of decrease in activity of the carbon dioxide absorbent material in this manner, the degree of carbon dioxide absorption by the carbon dioxide absorbent material may be easily determined. Therefore, the optimum timing for supplying the structure to the supply-receiving object may be easily grasped, and the supplying may be performed more easily.
(11) In any one of the above (1) to (10), the structure may hold the solution, and a pH of the solution at a time of performing the supplying may be 6.5 or more and 8.5 or less. If the pH of the solution at the time of performing the supplying is in the above range in this manner, the environmental load may be smaller.
(12) A method for manufacturing a structure according to another embodiment of the present disclosure is a method for manufacturing a structure that contains one or more carbon dioxide absorbent materials, which have absorbed carbon dioxide, wherein the carbon dioxide absorbent material is a metal or a metal compound, and wherein the method comprises causing contact between a carbonate ion and the carbon dioxide absorbent material covered with a solution.

In the method for manufacturing a structure, as the carbon dioxide absorbent material is a metal or a metal compound, the material absorbs carbon dioxide to change into a metal carbonate. The structure that contains a metal carbonate may be easily supplied to various supply-receiving objects, including a living body and the natural environment. Here, in addition, a supplying means that does not require energy may be easily adopted. Furthermore, if contact between a carbonate ion and the carbon dioxide absorbent material covered with a solution is caused, absorption of the carbonate ion may be promoted, whereby the metal carbonate may be easily manufactured. Therefore, the method for manufacturing a structure may easily manufacture a structure that may be easily handled and that causes a small environmental load.

(13) A structure according to another embodiment of the present disclosure comprises one or more carbon dioxide absorbent materials and a support member that supports the one or more carbon dioxide absorbent materials, wherein the carbon dioxide absorbent material is a metal or a metal compound.

In the structure, as the carbon dioxide absorbent material is a metal or a metal compound, the material absorbs carbon dioxide to change into a metal carbonate. In addition, as the structure comprises a support member that supports the carbon dioxide absorbent material, the contact between the carbon dioxide absorbent material and carbon dioxide is likely to be large, whereby the change of the carbon dioxide absorbent material into a metal carbonate is promoted. The metal carbonate may be easily supplied to various supply-receiving objects, including a living body and the natural environment. Here, in addition, a supplying means that does not require energy may be easily adopted. Therefore, the structure may be easily handled and causes a small environmental load.

(14) In the above (13), the carbon dioxide absorbent material may have absorbed carbon dioxide. As the carbon dioxide absorbent material absorbs carbon dioxide to change into a metal carbonate, the structure may be easily handled and causes a small environmental load as described above.

(15) A mixture according to another embodiment of the present disclosure contains at least a portion of the structure according to the above (13) or (14).

As the mixture contains at least a portion of the structure, the mixture may be easily handled and causes a small environmental load.

(16) A secondary processed product according to another embodiment of the present disclosure contains at least a portion of the structure according to the above (13) or (14).

As the secondary processed product contains at least a portion of the structure, the secondary processed product may be easily handled and causes a small environmental load.

In the present disclosure, "supply-receiving object" includes any object to which the carbon dioxide absorbent material that has absorbed carbon dioxide may be supplied and, therefore, the supply-receiving object may be, for example, an artificial object or a natural object. "Absorption of carbon dioxide" by the carbon dioxide absorbent material includes capturing of carbon dioxide by a metal ion or the like eluted from the carbon dioxide absorbent material. "Carbon dioxide absorbent material covered with a solution" may be a carbon dioxide absorbent material in a state of being covered with a solution, and is not limited to a configuration in which the carbon dioxide absorbent material is always covered with a solution. In addition, the carbon dioxide absorbent material may be in a state of being partially covered with a solution, and the carbon dioxide absorbent material covered with a solution is not limited to a configuration in which the entire carbon dioxide absorbent material is covered with a solution. Furthermore, the carbon dioxide absorbent material may be in contact with a member for transmitting the solution such as a cloth, and may be provided so as to be covered with the solution transmitted through the member.

### [Details of Embodiments of Present Disclosure]

The embodiments of the present disclosure will hereinafter be described in detail with reference to the drawings as necessary. The carbon dioxide absorbent material will be sometimes simply referred to as absorbent material in the description below.

### [Method for Reusing the Carbon Dioxide Absorbent Material]

### [First Embodiment]

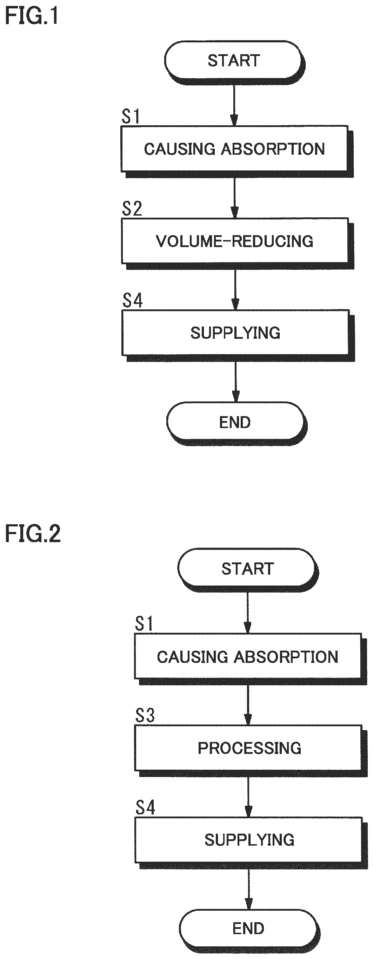

In the method for reusing the carbon dioxide absorbent material illustrated in Fig. 1, a structure that contains one or more carbon dioxide absorbent materials is used. The method for reusing the carbon dioxide absorbent material comprises causing absorption of carbon dioxide by the absorbent material S1, volume-reducing the structure S2, and supplying the structure to either location of a water area or a land area S4. The absorbent material is a metal or a metal compound.

In the method for reusing the carbon dioxide absorbent material, as the absorbent material is a metal or a metal compound, the material absorbs carbon dioxide to change into a metal carbonate. The structure that contains a metal carbonate may be easily supplied to a water area or a land area in a state where the influence on the natural environment is small. Here, in addition, a supplying means that does not require energy may be easily adopted. Therefore, the method for reusing the carbon dioxide absorbent material may be easily performed and causes a small environmental load.

### <Structure>

The structure is a complex that has one or more carbon dioxide absorbent materials and a support member that supports these carbon dioxide absorbent materials. In the present embodiment, the structure further has a determining mechanism that allows for determination of decrease in activity of the absorbent material. The structure may hold a solution. The solution is typically an aqueous solution. The solution may be adhered to the absorbent material, or impregnated in the support member. The solution may be the same as or different from the solution that covers the absorbent material in the causing absorption described later. The structure may be in a solid form or a gel form.

### (Carbon Dioxide Absorbent Material)

The absorbent material may be an alkali metal, an alkali earth metal, a transition metal, or a compound of these metals. Examples of the alkali metal include lithium, sodium, and potassium. Examples of the alkali earth metal include magnesium and calcium. Examples of the transition metal include iron. The absorbent material may be at least one selected from the group consisting of iron, an iron compound, magnesium, a magnesium compound, calcium, and a calcium compound. Furthermore, examples of the iron compound include iron oxide and iron hydroxide; examples of the magnesium compound include magnesium oxide and magnesium hydroxide; and examples of the calcium compound include calcium oxide and calcium hydroxide. If the absorbent material is a metal or a metal compound as described above, the environmental load may be small while easy absorption of carbon dioxide is ensured. The absorbent material may be any one of the metals and the metal compounds as described above, or a combination of two or more types of the metals and the metal compounds.

The absorbent material may be a layered double hydroxide represented by the following expression (1):

[M1₁₋ₓ²⁺M2ₓ³⁺(OH)₂]^{x+}[A_{x/n}ⁿ⁻ · yH₂O]^{x-} ... (1)

In the expression (1), M1 is a divalent metal, M2 is a trivalent metal, Aⁿ⁻ is an n-valent negative ion, x is a number of 0.2 or more and 0.33 or less, and n is an integer of 1 or more. Examples of M1 include Mg, Mn, Ni, and Zn. Examples of M2 include Al, Cr, Fe, and Co. Examples of Aⁿ⁻ include OH⁻, Cl⁻, NO₃⁻, CO₃²⁻, SO₄²⁻, and [Fe(CN)₆]³⁻. The absorbent material may be any one of the layered double hydroxides as described above, or a combination of two or more types of the layered double hydroxides.

The absorbent material is in a particulate form, and more specifically, in a powder form. The lower limit of the average particle diameter of a plurality of the absorbent materials may be 5 nm, 10 nm, or 15 nm from the viewpoint of promoting absorption of carbon dioxide. On the other hand, the upper limit of the average particle diameter may be 500 µm, 200 µm, or 100 µm from the viewpoint of suppressing aggregation of carbon dioxide. The average particle diameter may be 5 nm or more and 500 µm or less, 10 nm or more and 200 µm or less, or 15 nm or more and 100 µm or less. Here, "average particle diameter" refers to a median diameter which is the value at which the volume-based cumulative distribution calculated in accordance with JIS-Z-8819-2:2001 is 50 % (D50).

### (Support Member)

The support member supports one or more absorbent materials. If the structure comprises the support member, the structure may stably hold the absorbent material. In addition, if the support member supports a plurality of the absorbent materials, aggregation of the absorbent materials is suppressed, whereby the effect of absorption of carbon dioxide by the absorbent material is easily enhanced. That is, the change of the absorbent material into a metal carbonate is promoted.

Examples of the form of the support member include porous sheets, porous particles, porous threads, and other porous forms. Examples of the porous sheet include cloth, nonwoven fabric sheets, woven fabric sheets, sponge sheets, cellulose fiber sheets such as Japanese paper, and carbon fiber sheets. Examples of the porous particle include silica gel, an activated carbon particle, and porous glass. The porous thread is not particularly limited as long as the thread has a large number of pores, and examples of the thread include a hollow fiber membrane that has a fibrous skeleton. Examples of other porous forms include agar, gelatin, and water-absorbing polymers that form a mesh structure by containing a solution. The support member may support the absorbent material on the surface or in the pore. The form of the support member may be any one of the porous sheet, the porous particle, the porous thread, and other porous forms, or a combination of two or more types thereof.

The lower limit of the average particle diameter of the porous particle may be twice, 5 times, or 10 times the average particle diameter of the absorbent material from the viewpoint of easy support of the absorbent material. The lower limit of the average particle diameter of the porous particle may be 1.0 × 10⁻⁵ mm, 2.5 × 10⁻⁵ mm, or 5.0 × 10⁻⁴ mm. The upper limit of the average particle diameter may be 10 mm from the viewpoint of handleability. The upper limit of the average particle diameter may be 200 times, 100 times, or 50 times the average particle diameter of the absorbent material. The average particle diameter may be twice or more and 200 times or less, 5 times or more and 100 times or less, or 10 times or more and 50 times or less the average particle diameter of the absorbent material. The average particle diameter may be 1.0 × 10⁻⁵ mm or more and 10 mm or less, 2.5 × 10⁻⁵ mm or more and 10 mm or less, or 5.0 × 10⁻⁴ mm or more and 10 mm or less.

The lower limit of the average pore diameter of the porous sheet, the porous particle, or the porous thread may be the same as, 3 times, 5 times, or 10 times the average particle diameter of the absorbent material from the viewpoint of ensuring air permeability or from the viewpoint of easily allowing the absorbent material to be supported. The upper limit of the average pore diameter is not particularly limited, but may be, for example, 100 times the average particle diameter of the absorbent material. Here, "average pore diameter" is calculated from the BET specific surface area determined by a gas adsorption method in accordance with JIS-Z-8830-2: 2013 and the pore volume.

The support member may be a biodegradable material or a non-artificial material. Examples of the biodegradable material include biodegradable plastics such as polylactic acid and polyglycolic acid, and materials derived from biodegradable polymers such as cellulose acetate and esterified starch. Examples of the non-artificial material include seaweed extracts, plant cellulose, and materials derived from natural minerals. If the support member is a biodegradable material or a non-artificial material in this manner, the environmental load may be smaller.

The structure may have an optional component other than the absorbent material, the support member, and the solution. It is preferred, however, that a component that causes a large environmental load is not substantially contained as the optional component. Examples of the component that causes a large environmental load include soluble iron, soluble manganese, zinc, chromium, and copper.

### (Determining Mechanism)

The determining mechanism allows for determination of decrease in activity of the absorbent material. As the absorbent material is a metal or a metal compound, the material absorbs carbon dioxide to change into a metal carbonate. Therefore, for example, the numerical value of the pH may be an index of the activity of the absorbent material. That is, the determining mechanism may allow for determination of the numerical value of the pH of the solution held by the structure. Examples of such a determining mechanism include pH indicators such as thymol blue, methyl orange, methyl red, bromocresol purple, bromothymol blue (BTB), phenol red, neutral red, and litmus; extracts of purple cabbage, red perilla, spiderwort, purple heart, and turmeric; and test papers impregnated with pH indicators and extracts. The determining mechanism may be disposed in a portion of the structure, or may be dissolved in the solution held by the structure. In addition, the determining mechanism may be a mechanism that allows for visual determination of decrease in activity such as pH indicators, or a mechanism that allows for determination of decrease in activity by other senses such as the sense of smell. With the determining mechanism, the optimum timing for supplying the structure to the supply-receiving object (in the present embodiment, a water area or a land area) may be easily grasped, and supplying S4 may be performed more easily. That is, the structure in which one or more absorbent materials have absorbed sufficient carbon dioxide may be supplied to the supply-receiving object.

### <Causing Absorption >

In the present embodiment, in absorption-causing S1, absorption of carbon dioxide by the absorbent material is caused by supplying carbon dioxide to the structure that contains an absorbent material. The supplying of carbon dioxide to the structure includes exposing the structure to the atmosphere.

In absorption-causing S1, the absorbent material is preferably covered with a solution. The solution may be held by the support member. If the solution is held by the support member that supports the absorbent material in this manner, the absorbent material may be easily covered with the solution. The solution may be a solution that contains, for example, water as a solvent.

When carbon dioxide is supplied to the structure, the chemical equilibrium represented by the following expressions (2) and (3) occurs in the solution to generate a carbonate ion (CO₃²⁻) or a bicarbonate ion (HCO₃⁻). aq refers to a hydrated state, and the same is applied hereinafter.

CO₂(aq) = H⁺(aq) + HCO₃⁻(aq)... (2)

HCO₃⁻(aq) = H⁺(aq) + CO₃²⁻(aq)... (3)

In this manner, in the present embodiment, the absorbent material may easily absorb carbon dioxide in the form of a carbonate ion or a bicarbonate ion (hereinafter also referred to as "carbonate ion or the like") in the solution.

If the absorbent material is a layered double hydroxide represented by the expression (1), Aⁿ⁻ and water may be incorporated in a basic layer [M1₁₋ₓ²⁺M2ₓ³⁺(OH)₂]^{x+} in the solution. The layered double hydroxide may be a Mg-Al system in which M1 is Mg and M2 is Al, a Mg-Fe system in which M1 is Mg and M2 is Fe, an Fe-Fe system in which M1 and M2 are both Fe, or a Zn-Al system in which M1 is Zn and M2 is Al. If the layered double hydroxide is a Mg-Al system, a Mg-Fe system, an Fe-Fe system, or a Zn-Al system, a carbonate ion (CO₃²⁻) as Aⁿ⁻ may be easily incorporated. A layered double hydroxide that has incorporated a carbonate ion has a small influence on the natural environment and a living body, and may be easily handled.

If the absorbent material is at least one selected from the group consisting of iron, an iron compound, magnesium, a magnesium compound, calcium, and a calcium compound, other than the layered double hydroxide, M²⁺, which is a divalent metal ion (an iron ion, a magnesium ion, or a calcium ion), may be eluted in the solution to react with the carbonate ion or the like in the solution as described in the following expressions (4) and (5).

M²⁺(aq) + CO₃²⁻(aq) = MCO₃(aq)... (4)

M²⁺⁺(aq) + 2HCO₃⁻(aq) = M(HCO₃)₂(aq)... (5)

In this manner, if the absorbent material is at least one selected from the above group, reaction with the carbonate ion or the like generates a metal carbonate or a metal bicarbonate. The metal carbonate or the metal bicarbonate has a small influence on the natural environment and a living body, and may be easily handled.

The pH of the solution before the absorbent material absorbs carbon dioxide may be adjusted as necessary in accordance with the type of the absorbent material. For example, if the absorbent material is a layered double hydroxide, the pH may be more than 6. With such a configuration, the chemical equilibrium in the solution is likely to shift to increase the proportion of the carbonate ion (that is, the chemical equilibrium in each of the expression (2) and the expression (3) is likely to shift to the right side). Therefore, the absorption efficiency of the carbonate ion may be enhanced more. The lower limit of the pH of the solution may be 8 or 10 from the viewpoint of increasing the amount of the carbonate ion to be generated in the solution. On the other hand, the upper limit of the pH of the solution is not particularly limited, but may be, for example, 13 from the viewpoint of easy control of the pH of the solution. The pH of the solution may be 6 or more and 13 or less, 8 or more and 13 or less, or 10 or more and 13 or less.

If the absorbent material is at least one selected from the group consisting of iron, an iron compound, magnesium, a magnesium compound, calcium, and a calcium compound, other than the layered double hydroxide, the upper limit of the pH of the solution may be 6, 5, 4, 3, 2.5, 2, or 1.5 from the viewpoint of easily increasing the divalent metal ion in the solution. The lower limit of the pH of the solution is not particularly limited, but may be, for example, 0.

The solution may contain a dissolution accelerator for promoting dissolution of carbon dioxide in the solution, a pH buffer material, or a salt for decreasing or increasing the pH of the solution.

Examples of the dissolution accelerator include a carbonic anhydrase. The carbonic anhydrase promotes generation of the bicarbonate ion (HCO₃⁻) in the expression (2). If the solution contains a dissolution accelerator in this manner, the amount of the carbonate ion or the like in the solution may be easily increased. Therefore, the absorption efficiency of carbon dioxide may be enhanced more.

The pH buffer material (buffer) makes the pH of the solution easy to be maintained at a desired value. Examples of the pH buffer material include sodium tartrate, sodium acetate, sodium borate, sodium citrate, ammonium chloride, and sodium phosphate.

Examples of the salt for decreasing or increasing the pH of the solution include salts that exhibit basicity in the solution or salts that exhibit acidity in the solution. Examples of the salt that exhibits basicity in the solution, that is, the salt that exhibits basicity upon dissolution in the solution, include calcium chloride hydroxide, magnesium chloride hydroxide, and polyferric chloride. Examples of the salt that exhibits acidity in the solution, that is, the salt that exhibits acidity upon dissolution in the solution, include sodium hydrogen sulfate, ammonium hydrogen sulfate, sodium dihydrogen phosphate, iron (II) sulfate, and iron (II) chloride.

### <Volume-reducing>

In volume-reducing S2, the structure that has the absorbent material, which has absorbed carbon dioxide, is subjected to physical, chemical, and biological volume reduction. Examples of the physical volume reduction include absorbing the moisture held by the structure by using sodium chloride, a water-absorbent material, or the like. The physical volume reduction may be a volume reduction that removes the moisture held by the structure by an osmotic pressure. In addition, the volume reduction may be a volume reduction that reduces the unit of the handled structure (volume reduction) such as cutting of the structure into fine pieces. Examples of the chemical volume reduction include dissolving and separating the components of the structure such as the support member. Examples of the biological volume reduction include temporally disposing the structure in the soil or the like to allow microorganisms to decompose the structure. If the absorbent material absorbs carbon dioxide in a state of being covered with the solution, the absorbent material is likely to change into a gel-like substance that contains moisture together with carbon dioxide. That is, the mass and the volume are likely to increase. Therefore, volume-reducing S2 may reduce the mass and the volume of the structure that has the absorbent material, which has absorbed carbon dioxide, thereby enhancing the handleability of the structure. Therefore, supplying S4 described later may be performed more easily.

### <Supplying>

In supplying S4, the structure that has the absorbent material, which has absorbed carbon dioxide, is supplied to either location of a water area or a land area. Examples of the water area to which the structure is supplied include rivers, lakes, and oceans. Examples of the land area to which the structure is supplied include forests and unused lands in suburbs. Here, "supplying the structure to a water area or a land area" may refer to scattering or disposing of the structure in the water area or the land area, or the like.

The absorbent material contained in the structure has absorbed carbon dioxide to change into a metal carbonate and, therefore, causes a small environmental load. Accordingly, if the structure is supplied to a water area, for example, the supplying may be performed by discharging the structure into a drainage channel in an ordinary household if the structure is in a gel form. If the structure is supplied to a land area, the structure may be allowed to deposit in a soil for decomposition by microorganisms. That is, in supplying S4, a means that does not require transportation by mechanical energy or a large-scale facility may be adopted.

In supplying S4, the absorbent material may be diluted. If the absorbent material is diluted, the environmental load may be smaller. Examples of the method for diluting the absorbent material include dilution with a solvent such as water. The pH or the metal content may be adjusted to be in a predetermined range by diluting the absorbent material with the solvent. If the supply-receiving object is in a liquid form, the dilution may be performed at the same time as the supplying. In addition, the dilution and the supplying may be performed in separate steps.

At the time of performing supplying S4, the lower limit of the pH of the solution held by the structure may be 6.5 or 7 from the viewpoint of reducing the environmental load. On the other hand, the upper limit of the pH may be 8.5, 8, or 7.5 from the same viewpoint. The pH of the solution held by the structure may be 6.5 or more and 8.5 or less, 7 or more and 8 or less, or 7 or more and 7.5 or less.

At the time of performing supplying S4, the upper limit of the content of soluble iron or soluble manganese in the structure may be 10 mg/L, 5 mg/L, or 1 mg/L. Here, the content of soluble iron or soluble manganese is calculated by the mass [mg] of the iron element of the soluble iron or the manganese element of the soluble manganese based on the volume [L] of the solution supplied together with the structure in supplying S4.

At the time of performing supplying S4, the upper limit of the content of zinc or chromium in the structure may be 2 mg/L, 1 mg/L, or 0.5 mg/L. Here, the content of zinc or chromium is calculated by the mass [mg] of the zinc element or the chromium element based on the volume [L] of the solution supplied together with the structure in supplying S4.

At the time of performing supplying S4, the upper limit of the content of copper in the structure may be 3 mg/L, 2 mg/L, or 1 mg/L. Here, the content of copper is calculated by the mass [mg] of the copper element based on the volume [L] of the solution supplied together with the structure in supplying S4.

### [Second Embodiment]

In the method for reusing the carbon dioxide absorbent material illustrated in Fig. 2, a structure that contains one or more absorbent materials is used. The method for reusing the carbon dioxide absorbent material comprises causing absorption of carbon dioxide by the absorbent material S1, processing the structure into a secondary processed product S3, and supplying the secondary processed product to a user S4. The structure may be the same as the structure described in First Embodiment. In addition, absorption-causing S1 may be the same as the absorption-causing described in First Embodiment. Here, "supplying the secondary processed product to a user" may refer to selling or giving the secondary processed product to a user, or the like. The secondary processed product is a product obtained by processing at least a portion of the structure that has the absorbent material, which has absorbed carbon dioxide, or a product obtained by processing a mixture obtained by mixing at least a portion of the structure with another material. Before obtaining the secondary processed product, steps such as cutting of the structure into fine pieces and separation of a metal carbonate may or may not be performed.

In the method for reusing the carbon dioxide absorbent material, as the absorbent material is a metal or a metal compound, the material absorbs carbon dioxide to change into a metal carbonate. The structure that contains a metal carbonate may be easily supplied to a user in a state of being added to a secondary processed product that has a small influence on the natural environment or a secondary processed product that may be ingested by humans. In addition, the amount of energy to be used may be reduced compared with a case where the raw material of the secondary processed product is other than the absorbent material. For example, compared with a case where a metal carbonate is mined for secondary processing, in the method for reusing the carbon dioxide absorbent material, the absorbent material is reused, whereby processing into a secondary processed product may be performed easily at a low cost and, furthermore, the amount of energy to be used may be reduced. In addition, in the process before the secondary processed product is supplied to a user, carbon dioxide is absorbed, thereby contributing to reducing carbon dioxide emission. Therefore, the method for reusing the carbon dioxide absorbent material may be easily performed and causes a small environmental load.

### <Processing>

The specific steps in processing S3 are set as necessary in accordance with the type of the secondary processed product. In processing S3, at least a portion of the structure that has the absorbent material, which has absorbed carbon dioxide, is processed, or a mixture obtained by mixing at least a portion of the structure with another material is processed. Processing S3 may comprise, as an optional step, separating a metal carbonate from the structure, obtaining a mixture by mixing at least a portion of the structure (a metal carbonate or the like) with another material, or the like. Processing S3 may be accompanied by mechanical processing, chemical processing, biological processing, or the like on the structure or the mixture. Examples of the secondary processed product include mineral-enriched foods, supplements, pet food, cosmetics, and medicines.

### <Supplying>

In supplying S4, the secondary processed product is supplied to a user such as consumers.

### [Third Embodiment]

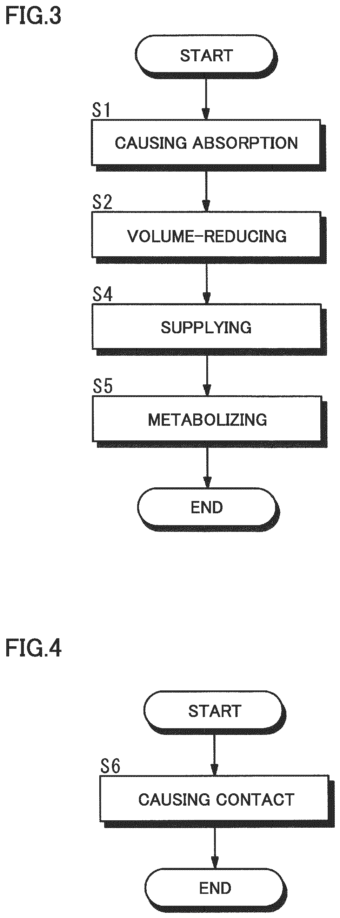

In the method for reusing the carbon dioxide absorbent material illustrated in Fig. 3, a structure that contains one or more absorbent materials is used. The method for reusing the carbon dioxide absorbent material comprises causing absorption of carbon dioxide by the absorbent material S1, volume-reducing the structure S2, supplying the structure to a living thing S4, and metabolizing of the supplied absorbent material by the living thing in supplying S4 S5. The structure may be the same as the structure described in First Embodiment. In addition, absorption-causing S1 and volume-reducing S2 may be the same as absorption-causing S1 and volume-reducing S2 described in First Embodiment. Here, "supplying the structure to a living thing" may refer to feeding a living thing or the like.

In the method for reusing the carbon dioxide absorbent material, as the absorbent material is a metal or a metal compound, the material absorbs carbon dioxide to change into a metal carbonate. The structure that contains a metal carbonate may be easily supplied to a living thing in a state of being able to be metabolized. Here, in addition, a supplying means that does not require energy may be easily adopted. Furthermore, a metal carbonate is retained in the body or the excrement of the living thing through metabolizing S5, thereby contributing to reducing carbon dioxide emission. Therefore, the method for reusing the carbon dioxide absorbent material may be easily performed and causes a small environmental load.

### <Supplying>

The living thing to which the structure is supplied in supplying S4 is not particularly limited as long as the living thing may metabolize a metal carbonate derived from the absorbent material, and examples of the living thing include pets (including insects), soil microorganisms, agricultural crops, cultured fish, and livestock. In addition, the living thing to which the structure is supplied may be humans. In supplying S4, a step that requires as little transportation by mechanical energy as possible, such as supplying the structure to a living thing that exists near the location at which absorption-causing S1 has been performed, may be adopted.

### <Metabolizing>

In metabolizing S5, a living thing metabolizes a metal carbonate derived from the absorbent material. The metabolized metal carbonate may change into an organic compound that composes the living body to be stored in the body of the living thing, or to be supplied to the natural environment such as soils and oceans as excrement to be retained therein. In both of the above cases, carbon dioxide is temporally stored without being released into the atmosphere, thereby contributing to reducing carbon dioxide emission.

### [Method for Manufacturing Structure]

The method for manufacturing the structure illustrated in Fig. 4 is a method for manufacturing the structure that contains one or more absorbent materials, which have absorbed carbon dioxide, wherein the absorbent material is a metal or a metal compound, and wherein the method comprises causing contact between a carbonate ion or the like and the absorbent material covered with a solution S6. The structure may be the same as the structure described in First Embodiment. In addition, contact-causing S6 may be the same as absorption-causing S1 in First Embodiment.

In the method for manufacturing the structure, as the absorbent material is a metal or a metal compound, the material absorbs carbon dioxide to change into a metal carbonate. The structure that contains a metal carbonate may be easily supplied to various supply-receiving objects, including a living body and the natural environment. Here, in addition, a supplying means that does not require energy may be easily adopted. Furthermore, if contact between the carbonate ion or the like and the absorbent material covered with a solution is caused, absorption of the carbonate ion or the like may be promoted, whereby the metal carbonate may be easily manufactured. Therefore, the method for manufacturing the structure may easily manufacture a structure that may be easily handled and that causes a small environmental load.

### [Structure]

The structure according to one embodiment of the present invention comprises one or more absorbent materials, and a support member that supports the one or more absorbent materials, wherein the absorbent material is a metal or a metal compound. The structure may be the same as the structure described in First Embodiment.

In the structure, as the absorbent material is a metal or a metal compound, the material absorbs carbon dioxide to change into a metal carbonate easily. In addition, as the structure comprises a support member that supports the absorbent material, the contact between the absorbent material and carbon dioxide is likely to be large, whereby the change of the absorbent material into a metal carbonate is promoted. The metal carbonate may be easily supplied to various supply-receiving objects, including a living body and the natural environment. Here, in addition, a supplying means that does not require energy may be easily adopted. Therefore, the structure may be easily handled and causes a small environmental load.

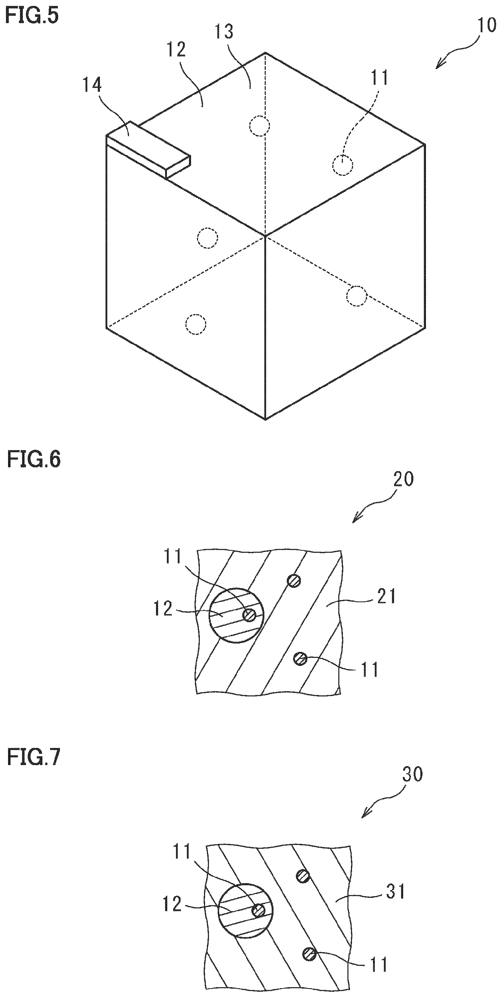

As an example of the structure, a structure 10 is illustrated in Fig. 5. Structure 10 comprises a plurality of carbon dioxide absorbent materials 11 and a support member 12 that supports absorbent material 11. A plurality of absorbent materials 11 are each a particle of magnesium oxide or iron oxide. Support member 12 is a non-artificial material. More specifically, support member 12 is agar, which is a material derived from seaweed extracts that has a porous form. In addition, support member 12 holds a solution 13 and is in a gel form. Solution 13 is held by support member 12 so as to cover supported absorbent material 11. That is, absorbent material 11 is covered with solution 13. As absorbent material 11 is covered with solution 13 in this manner, the carbonate ion or the like generated in solution 13 is easily absorbed in absorbent material 11, whereby absorbent material 11 changes into magnesium carbonate or iron carbonate. Absorbent material 11 that has absorbed the carbonate ion or the like (magnesium carbonate or iron carbonate) may be easily supplied to a living thing such as pets together with support member 12, which is a non-artificial material. In addition, the structure may be easily supplied to a water area by discharging the structure into a drainage channel in a household.

Structure 10 further comprises a determining mechanism 14 that allows for determination of decrease in activity of absorbent material 11. Examples of determining mechanism 14 include a purple cabbage extract and a litmus paper. For example, a purple cabbage extract may be allowed to be supported by support member 12, and a litmus paper may be stuck to the surface of support member 12. When absorbent material 11 absorbs a carbonate ion or the like to change the pH of solution 13 held by support member 12, the color of determining mechanism 14 changes. Therefore, a timing at which magnesium carbonate or iron carbonate is sufficiently generated, which is optimum for supplying the structure to the living thing or the water area as described above, may be determined. In Fig. 5, a litmus paper stuck to the surface of support member 12 as determining mechanism 14 is illustrated.

### [Mixture]

The mixture according to one embodiment of the present invention contains at least a portion of the structure. The structure is as described above. The mixture may be, for example, a mixture that contains the absorbent material that has absorbed carbon dioxide to change into a metal carbonate. In the mixture, the structure may have been subjected to cutting into fine pieces, dispersing, or the like, and the absorbent material and the support member, which are each a portion of the structure, may be separated from each other. In addition, in the mixture, the structure may be maintained to be in the original shape before mixing.

As the mixture contains at least a portion of the structure, the mixture may be easily handled and causes a small environmental load.

Specific examples of the mixture include fertilizer for plants, water-retaining materials for agricultural lands, soil conditioners, detergents, and paints in which at least a portion of the structure (for example, a metal carbonate) is mixed. As an example of the mixture, a mixture 20 is illustrated in Fig. 6. Mixture 20 is a fertilizer for plants that contains absorbent material 11 and support member 12, which are each a portion of structure 10, and another component 21. Another component 21 is, for example, an organic component. Mixture 20 is obtained by, for example, stirring structure 10 and another component 21.

### [Secondary Processed Product]

The secondary processed product according to one embodiment of the present invention contains at least a portion of the structure. The structure is as described above. The secondary processed product may be, for example, a secondary processed product that contains the above absorbent material that has absorbed carbon dioxide to change into a metal carbonate. The secondary processed product may be a product obtained by processing at least a portion of the structure, or a product obtained by processing a mixture obtained by mixing at least a portion of the structure with another material. That is, the secondary processed product is not limited to a product obtained by directly processing the structure, and may be a product obtained by processing the mixture that contains the structure. Here, "processing" includes, in addition to mechanical processing, chemical processing and biological processing. In the secondary processed product, the structure may have been subjected to cutting into fine pieces, dispersing, or the like, and the absorbent material and the support member, which are each a portion of the structure, may be separated from each other. In addition, in the secondary processed product, the structure may be maintained to be in the original shape before mixing or processing.

As the secondary processed product contains at least a portion of the structure, the secondary processed product may be easily handled and causes a small environmental load.

Specific examples of the secondary processed product include mineral-enriched foods, supplements, pet food, cosmetics, and medicines that contain at least a portion of the structure (for example, a metal carbonate). As an example of the secondary processed product, a secondary processed product 30 is illustrated in Fig. 7. Secondary processed product 30 is a mineral-enriched food that contains absorbent material 11 as a mineral component. Secondary processed product 30 contains absorbent material 11 and support member 12, which are each a portion of structure 10, and another component 31. Another component 31 is, for example, a food component. Secondary processed product 30 is obtained by, for example, mixing structure 10 with another component 31, and then subjecting the mixture to processing such as heating and forming.

### [Other Embodiments]

The embodiments disclosed herein should be considered to be, in all aspects, illustrative and not limitative. The scope of the present invention is not limited to the configurations of the embodiments, and is shown by claims, and it is contemplated that all modifications within the meaning and the scope of the claims and equivalents thereof are included.

In the method for reusing the carbon dioxide absorbent material according to one embodiment of the present disclosure, the volume-reducing step may be omitted as necessary. For example, where the structure is supplied to forests, oceans, or the like, if the influence on the natural environment is considered to be sufficiently small, the volume-reducing step may be omitted and the structure may be directly supplied.

In the method for reusing the carbon dioxide absorbent material according to one embodiment of the present disclosure, the supplying may be accompanied by use of electric energy or the like. For example, from the viewpoint of LCA of carbon dioxide, if the method for reusing the carbon dioxide absorbent material is evaluated as sufficiently reducing the carbon dioxide emission, mechanical energy, electric energy, or the like may be used within the range.

The method for reusing the carbon dioxide absorbent material according to one embodiment of the present disclosure may further comprise the supplying, after the metabolizing. For example, the structure may be allowed to be metabolized by insects as feed for raising insects, and then the remaining structure may be supplied to a soil.

The structure may be a structure that does not have the support member. For example, the structure may contain the carbon dioxide absorbent material only that has absorbed carbon dioxide.

### REFERENCE SIGNS LIST

10 Structure;
11 Absorbent material;
12 Support member;
13 Solution;
14 Determining mechanism;
20 Mixture;
21 Another component;
30 Secondary processed product;
31 Another component

## Claims

1. A method for reusing a carbon dioxide absorbent material, the method comprising supplying a structure that contains one or more carbon dioxide absorbent materials, which have absorbed carbon dioxide, to a supply-receiving object,
wherein the carbon dioxide absorbent material is a metal or a metal compound.

2. The method for reusing the carbon dioxide absorbent material according to claim 1, the method further comprising causing absorption of carbon dioxide by the carbon dioxide absorbent material before the supplying,
wherein contact between a carbonate ion and the carbon dioxide absorbent material covered with a solution is caused in the causing the absorption.

3. The method for reusing the carbon dioxide absorbent material according to claim 1 or 2, wherein the carbon dioxide absorbent material is diluted in the supplying.

4. The method for reusing the carbon dioxide absorbent material according to any one of claims 1 to 3,
wherein the supply-receiving object is a living thing, and
wherein the method further comprises metabolizing of the supplied carbon dioxide absorbent material by the living thing in the supplying.

5. The method for reusing the carbon dioxide absorbent material according to any one of claims 1 to 4, further comprising volume-reducing the structure.

6. The method for reusing the carbon dioxide absorbent material according to any one of claims 1 to 5, wherein the carbon dioxide absorbent material is an alkali metal, an alkali earth metal, a transition metal, or a compound of these metals.

7. The method for reusing the carbon dioxide absorbent material according to claim 6, wherein the carbon dioxide absorbent material is at least one selected from the group consisting of iron, an iron compound, magnesium, a magnesium compound, calcium, and a calcium compound.

8. The method for reusing the carbon dioxide absorbent material according to any one of claims 1 to 7, wherein the structure has a support member that supports the one or more carbon dioxide absorbent materials.

9. The method for reusing the carbon dioxide absorbent material according to claim 8, wherein the support member is a biodegradable material or a non-artificial material.

10. The method for reusing the carbon dioxide absorbent material according to any one of claims 1 to 9, wherein the structure has a determining mechanism that allows for determination of decrease in activity of the carbon dioxide absorbent material.

11. The method for reusing the carbon dioxide absorbent material according to any one of claims 1 to 10, wherein the structure holds the solution, and a pH of the solution at a time of performing the supplying is 6.5 or more and 8.5 or less.

12. A method for manufacturing a structure that contains one or more carbon dioxide absorbent materials, which have absorbed carbon dioxide,
wherein the carbon dioxide absorbent material is a metal or a metal compound, and
wherein the method comprises causing contact between a carbonate ion and the carbon dioxide absorbent material covered with a solution.

13. A structure comprising:
one or more carbon dioxide absorbent materials; and
a support member that supports the one or more carbon dioxide absorbent materials,
wherein the carbon dioxide absorbent material is a metal or a metal compound.

14. The structure according to claim 13, wherein the carbon dioxide absorbent material has absorbed carbon dioxide.

15. A mixture containing at least a portion of the structure according to claim 13 or 14.

16. A secondary processed product containing at least a portion of the structure according to claim 13 or 14.
